(19) Europäisches Patentamt
European Patent Office
Office européen des brevets

(11) **EP 3 226 671 B1**

(12) **FASCICULE DE BREVET EUROPEEN**

(45) Date de publication et mention de la délivrance du brevet:
**28.11.2018 Bulletin 2018/48**

(21) Numéro de dépôt: **15804456.0**

(22) Date de dépôt: **02.12.2015**

(51) Int Cl.:
*A01B 63/10* (2006.01)     *A01D 41/14* (2006.01)
*A01D 45/02* (2006.01)

(86) Numéro de dépôt international:
**PCT/EP2015/078383**

(87) Numéro de publication internationale:
**WO 2016/087526 (09.06.2016 Gazette 2016/23)**

(54) **SYSTÈME ET PROCÉDÉ D'AJUSTEMENT AUTOMATIQUE DE LA HAUTEUR D'UN OUTIL AGRICOLE AU MOYEN D'UN RIDEAU LUMINEUX DE MESURE**

SYSTEM UND VERFAHREN ZUR AUTOMATISCHEN ANPASSUNG EINES LANDWIRTSCHAFTLICHEN ANBAUGERÄTS MIT EINEM MESSENDEN LICHTVORHANG

SYSTEM AND METHOD FOR THE AUTOMATIC ADJUSTMENT OF AN AGRICULTURAL IMPLEMENT USING A MEASURING LIGHT SCREEN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2014 FR 1462002**

(43) Date de publication de la demande:
**11.10.2017 Bulletin 2017/41**

(73) Titulaire: **Commissariat à l'Énergie Atomique et aux Énergies Alternatives
75015 Paris (FR)**

(72) Inventeurs:
• **BRIQUET-KERESTEDJIAN, Nolwenn
75014 Paris (FR)**
• **COLLEDANI, Frédéric
91300 Massy (FR)**
• **LELONG, Baptiste
63730 Les Martres de Veyre (FR)**

(74) Mandataire: **Brevalex
95, rue d'Amsterdam
75378 Paris Cedex 8 (FR)**

(56) Documents cités:
AU-A- 5 387 473     US-A1- 2013 345 937
US-A1- 2014 236 381     US-B2- 8 381 502

**Description**

**DOMAINE TECHNIQUE**

Le domaine de l'invention est celui des systèmes robotiques agricoles. L'invention vise plus particulièrement un système permettant d'ajuster automatiquement la position d'un outil agricole, tel qu'un outil de coupe ou d'arrachage de végétaux. Elle trouve en particulier application dans l'automatisation des opérations de castration mécanique des champs de maïs semence.

**ÉTAT DE LA TECHNIQUE ANTÉRIEURE**

Le maïs est une plante autogame fortement soumise à l'effet d'hétérosis, c'est-à-dire à l'amélioration des capacités et de la vigueur de la plante sous forme hybride ou hétérozygote par rapport à la plante sous forme homozygote. Les sélectionneurs cherchent donc à croiser deux lignées génitrices homozygotes afin d'obtenir une variété hybride plus productive et plus vigoureuse et dotée de caractéristiques agronomiques intéressantes.

La plante de maïs est monoïque, constitué d'une inflorescence mâle, appelée panicule qui se trouve au sommet de la plante et est responsable de l'émission de pollen, et d'une inflorescence femelle se situant à mi-hauteur de la plante, à la base d'une feuille. Cette inflorescence est composée de stigmates ou soies réceptrices qui sont fécondées par le pollen, et conduisent à la formation de l'épi. La production de semences hybrides est réalisée en cultivant dans une même parcelle, généralement sur des lignes intercalées, des plantes des deux lignées parentes de l'hybride. La panicule de la lignée génitrice femelle est écimée avant floraison pour que ces plantes soient fécondées par le pollen de la lignée génitrice maie. Les épis récoltés sur cette lignée génitrice femelle portent ainsi les grains hybrides qui seront commercialisés. La production d'hybrides ne se limite pas à l'obtention d'hybrides simples issus du croissement de deux lignées de maïs, elle peut consister au croissement d'un hybride et d'une lignée (hybride trois voies) ou au croisement de deux hybrides (hybride double).

L'écimage de la panicule mâle sur les géniteurs femelles avant floraison est ainsi une étape essentielle du processus de production de semences de maïs hybride. En effet, la présence de pollen, même en faible quantité, entraine des autofécondations sur ces géniteurs femelles et une contamination dans la production d'hybrides. Cet écimage était traditionnellement réalisé manuellement. Le coût en main d'oeuvre engendré par cette étape étant important, on a cherché à mécaniser cette étape avec différents outils, dont des couteaux destinés à couper la cime des plantes et des rouleaux destinés à la panicule ou le cornet.

Le processus de castration mécanique peut être réalisé soit avec un ou plusieurs passages de couteaux uniquement, soit en deux temps. Dans un premier temps, un passage aux couteaux est effectué sur les rangs géniteurs femelles : des lames tournantes coupent le sommet de la plante mâle. La hauteur de coupe idéale est située aux trois quarts du cornet, c'est-à-dire la feuille entourant la panicule, à partir de sa cime ou aux trois quarts de la panicule si celle-ci dépasse du cornet. Entre deux et cinq jours plus tard, lorsque la panicule a un peu repoussé (2 à 5 cm) mais avant qu'elle soit suffisamment ouverte pour émettre du pollen, un arrachage aux rouleaux ou aux pneus est réalisé. L'objectif est d'attraper la panicule avec les rouleaux ou les pneus en arrachant le moins possible le cornet ou les feuilles qui se trouveraient encore autour. Pour cela, il faut placer les rouleaux à la base de la panicule tout en restant au-dessus des feuilles. La première coupe a pour but de débroussailler le rang afin qu'ensuite la panicule dépasse parmi le feuillage qui est resté relativement rectiligne puisque la panicule repousse plus vite que les feuilles. L'objectif de la deuxième coupe est d'arracher le reste de la panicule et d'éliminer ainsi tout risque d'auto-reproduction.

Au cours de ces opérations, l'agriculteur évalue visuellement la hauteur de coupe optimale de la panicule, depuis la nacelle de sa machine et actionne une manette qui régit la hauteur des outils de coupe et d'arrachage. Généralement, deux rangs sont coupés simultanément à la même hauteur ce qui permet de gagner du temps mais risque de pénaliser la coupe d'un des deux rangs si les plantes ne sont pas de taille homogène. La qualité de la coupe est donc limitée par la réactivité du conducteur mais aussi par la précision que permet l'architecture actuelle de la machine. En conséquence, de nombreuses panicules ne sont pas coupées à la bonne hauteur. A l'issue des deux étapes de la castration mécanique, seules 70 à 80% des panicules sont éliminées.

Il est ensuite nécessaire de compléter cette étape par une étape de castration manuelle des panicules restantes, et des parties restantes des panicules coupées lorsque la coupe n'a pas permis l'élimination totale de la panicule, afin de respecter les normes définies par le GNIS (Groupement National Interprofessionnel des Semences et plants) relatives au taux de pureté à respecter pour la production de maïs semence. Chaque été et pendant quelques semaines, les agriculteurs embauchent plusieurs dizaines d'ouvriers afin de réaliser ce travail fastidieux et pénible.

On cherche donc à réaliser ces opérations de castration mécanique de manière automatisée afin d'en améliorer le rendement, d'en réduire les coûts et d'en diminuer la pénibilité.

Dans tous les systèmes de castration mécanique actuellement disponibles, l'élimination de la panicule est indissociable de l'élimination de feuilles notamment les feuilles du cornet. Cette élimination de matière végétale pénalise la plante dans son développement futur et impacte le rendement final de la culture. L'amélioration des systèmes de castration mécanique est donc un réel enjeu en machinisme agricole, le but étant d'optimiser l'arrachage de la panicule tout en minimisant l'élimination de végétation.

Plusieurs approches proposent une solution d'ajustement automatique de la hauteur de coupe avec un capteur de mesure propre à chaque rang.

Le système proposé par le brevet US 4,197,691 utilise un capteur de mesure constitué de tiges verticales juxtaposées montées sur un arbre pivotant plus ou moins au contact des feuilles ce qui déclenche l'envoi d'un signal de montée ou de descente. Cependant, ce système de capteur par contact requiert un ajustement permanent de la hauteur de coupe. De plus, deux rangs sont toujours coupés simultanément à une hauteur commune.

D'autres approches proposent des capteurs de mesure de distances vues de dessus, comme pour le système proposé par le brevet US 4,507,910 qui étudie la mesure et le contrôle de hauteurs lors d'une récolte par une moissonneuse. Le capteur utilisé est un capteur à ultrason situé en amont de la roue batteuse. Il est placé au-dessus des récoltes et mesure la distance relative entre les récoltes et le capteur. Puis un signal est envoyé pour ajuster la hauteur de la roue batteuse par rapport à la hauteur désirée pour la récolte.

Le modèle proposé par le brevet US 8,381,502 est semblable au système précédent mais est adapté à une machine agricole de castration de maïs. Des photocellules placées en amont au-dessus des pieds de maïs repèrent le sommet des feuilles de deux rangs à la fois, puis envoient un signal de montée ou de descente pour venir couper les deux rangs à une hauteur commune. Du fait des différences de hauteurs, de la rugosité du sol et de la vitesse du véhicule, le système tente en permanence d'ajuster la consigne afin de maintenir une hauteur de coupe uniforme.

On connaît par ailleurs un système proposé par la SARL Duissard qui repose sur deux lots de cellules photoélectriques émettrices/réceptrices placés en amont des outils de coupe et situées à 13cm l'un en-dessous de l'autre, de part et d'autres de deux rangs. Ces cellules fonctionnent en détection directe : un faisceau infrarouge est émis par la cellule photoélectrique tandis qu'un réflecteur, situé en face, réfléchit le faisceau vers la cellule qui le réceptionne. Si du maïs se trouve sur le parcours du faisceau, alors celui-ci ne sera pas réceptionné par la cellule photoélectrique. La hauteur maximale est détecté lorsque la cellule inférieure voit du maïs (faisceau obstrué par le maïs donc non-perçu par la cellule inférieure) et que la cellule supérieure n'en voit pas (faisceau perçu par la cellule supérieure), à la précision près de l'écart entre les deux photocellules soit 13 cm. Ainsi, lorsque les deux cellules voient du maïs (les deux faisceaux sont obstrués) alors la hauteur de coupe est trop basse et un vérin s'allonge pour que le bras portant les outils de coupe remonte. A l'inverse, lorsque qu'aucune des deux cellules ne voient du maïs (les deux faisceaux sont réceptionnés par les cellules) alors la hauteur de coupe est trop haute et la tige du vérin rentre pour que le bras s'abaisse. L'installation d'une temporisation est nécessaire pour conserver la consigne pendant plusieurs secondes car le temps de détection et de l'envoi de la consigne sont trop brefs par rapport au temps nécessaire au déplacement du bras.

Ce système envoie ainsi une consigne « tout ou rien » à l'actionneur (montée ou descente) à cause de la présence de seulement deux photocellules. Le système tente donc en permanence d'ajuster la hauteur de coupe avec des consignes répétées et parfois contraires ce qui le sollicite fortement.

Par ailleurs dès que les cellules voient du vide, par exemple entre deux pieds de maïs, l'ensemble du bras va descendre pour devoir remonter aussitôt après au niveau du pied suivant. De même, à la fin d'un rang l'ensemble du système va descendre et probablement rater les premiers pieds du rang suivant.

Le degré de précision est par ailleurs limité par l'espacement vertical entre les deux lots de photocellules, soit 13 cm. Les cellules traitent en outre l'information pour deux rangs simultanément donc le pied de maïs du rang le plus bas sera coupé trop haut. Enfin, l'encombrement du système global reste un problème pour les agriculteurs.

Le document AU 53874 73 A divulgue également un système de l'art antérieur.

**EXPOSÉ DE L'INVENTION**

L'invention vise à améliorer les systèmes existants d'automatisation des opérations de coupe ou d'arrache de végétaux, et propose pour ce faire un système d'ajustement de la hauteur d'un outil agricole, comprenant un bras apte à être commandé pour permettre d'élever et d'abaisser l'outil agricole, un capteur de mesure de hauteur monté sur le bras et positionné de manière à être au-devant de l'outil agricole dans une direction de trajet d'un véhicule destiné à être équipé du bras, et un calculateur configuré pour fournir une consigne de commande de la hauteur du bras à partir des mesures réalisées par le capteur de mesure de hauteur, caractérisé en ce que le capteur de mesure de hauteur est un appareil à rideau de lumière composé d'un émetteur sous la forme d'une colonne de sources lumineuses et d'un récepteur sous la forme d'une colonne de photorécepteurs, l'émetteur et le récepteur étant montés sur le bras de manière à se faire face et à s'étendre selon leur direction longitudinale perpendiculairement au sol pour permettre de mesurer la hauteur de végétaux présents entre eux.

Certains aspects préférés mais non limitatifs de ce système sont les suivants :

- le capteur de mesure de hauteur est configuré pour réaliser un balayage droit selon lequel tous les faisceaux entre une source lumineuse et un photorécepteur se faisant face sont balayés à tour de rôle depuis le faisceau le plus proche du sol et pour fournir une indication relative au dernier faisceau bloqué ;

- il comprend en outre une mémoire dans laquelle sont enregistrées les mesures réalisées par le capteur de mesure de hauteur, et le calculateur est configuré pour fournir la consigne de commande de la hauteur du bras sur la base de mesures précédemment enregistrées dans la mémoire et correspondant au déplacement préalable du capteur de mesure de hauteur sur une distance prédéterminée de la direction de trajet en amont de la position actuelle de l'outil de coupe ;
- il comprend en outre un capteur de mesure de la vitesse d'avancement dans la direction de trajet du véhicule, et le calculateur est en outre configuré pour déterminer la distance parcourue le long de la direction de trajet entre deux mesures successivement réalisées par le capteur de mesure de hauteur ;
- le calculateur est configuré pour fournir la consigne de commande de la hauteur du bras à partir de la moyenne des mesures précédemment réalisées par le capteur de mesure de hauteur sur ladite distance prédéterminée ;
- le calculateur est configuré pour fournir la consigne de commande de la hauteur du bras à partir du maxima des mesures précédemment réalisées par le capteur de mesure de hauteur sur ladite distance prédéterminée ;
- le calculateur est configuré pour calculer une densité foliaire indiquant, pour chaque intervalle de hauteur d'un ensemble d'intervalles successifs, le pourcentage de mesures parmi les mesures précédemment réalisées par le capteur de mesure de hauteur sur ladite distance prédéterminée qui indiquent une hauteur supérieure à la borne inférieure de l'intervalle de hauteur, et pour fournir la consigne de commande de la hauteur du bras à partir de la borne inférieure d'un intervalle de hauteur correspondant à un pourcentage seuil.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est une vue en perspective schématique d'un système selon un mode de réalisation possible de l'invention ;
- la figure 2 est un schéma d'un modèle simplifié du bras portant l'outil agricole et le capteur de mesure de hauteur ;
- la figure 3 est un schéma illustrant l'échantillonnage des données du capteur de mesure lors du déplacement d'un véhicule équipé du bras et leur utilisation ultérieure pour la détermination de la consigne de commande de la hauteur de l'outil agricole ;
- la figure 4 est un schéma représentant une densité foliaire pouvant être déterminée dans un mode de réalisation possible de l'invention.

## EXPOSÉ DÉTAILLÉ DE MODES DE RÉALISATION PARTICULIERS

L'invention porte sur un système d'ajustement de la hauteur d'un outil agricole. Elle s'applique d'une manière générale à tout domaine où une mesure et un ajustement de hauteur sont nécessaires, notamment pour des outils de coupe ou d'arrachage de végétaux tels que ceux utilisés pour la castration de maïs ou pour la récolte céréalière.

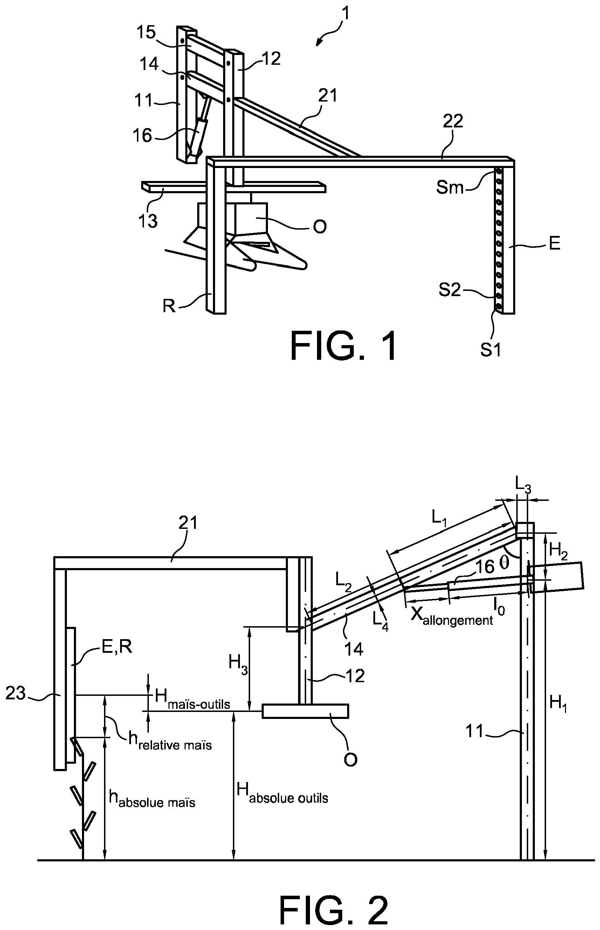

En référence aux figures 1 et 2, l'invention porte sur un système d'ajustement de la hauteur d'un outil agricole O. Ce système est formé d'un bras 1 apte à être commandé pour permettre d'élever et d'abaisser l'outil agricole, d'un capteur de mesure de hauteur E, R monté sur le bras et positionné de manière à être au-devant de l'outil agricole O dans une direction de trajet d'un véhicule destiné à être équipé du bras, et un calculateur configuré pour fournir une consigne de commande de la hauteur du bras à partir des mesures réalisées par le capteur de mesure de hauteur.

L'outil agricole est typiquement un outil de coupe (par exemple un outil de coupe à couteaux) ou d'arrachage (par exemple à pneus ou à rouleaux) de végétaux. Un tel outil comprend généralement un instrument de coupe ou d'arrachage (couteaux, pneus ou rouleaux), un moteur d'entraînement de l'instrument, un guide de végétation et un carter de protection.

Pour la castration du maïs, le véhicule utilisé est un enjambeur qui permet d'enjamber les rangs géniteurs mâles qui ne seront pas coupés ou arrachés et de couper ou arracher plusieurs rangs géniteurs femelles à la fois. Un enjambeur classique comporte généralement deux ou quatre bras en amont du véhicule, chaque bras portant deux outils de coupe ou d'arrachage afin de castrer simultanément deux rangs à la même hauteur, ce qui permet de gagner du temps mais risque de pénaliser la coupe d'un ou des deux rangs. Dans un mode de réalisation possible de l'invention, on n'utilise qu'un seul outil de coupe ou d'arrachage par bras afin d'individualiser la coupe par rang de culture.

Revenant aux figures 1 et 2, le bras 1 comprend un montant vertical arrière 11 formant la connexion structurelle principale avec le véhicule agricole, et un montant vertical avant 12 qui porte à son extrémité inférieure une barre horizontale de support d'outil agricole 13 qui s'étend perpendiculairement à la direction de trajet et sur laquelle est monté l'outil agricole O. Dans une variante de réalisation, le bras peut porter plusieurs outils agricoles, deux typiquement, pour la réalisation d'opérations simultanées sur plusieurs rangs de culture.

Les montants verticaux 11 et 12 sont reliés entre eux par des montants de liaison 14 et 15 montés de manière pivotante par rapport au montant vertical arrière 11. Un vérin 16 est monté entre le montant vertical arrière 11 et le montant de liaison 14, et fournit un moyen d'ajuster la hauteur du montant de liaison 14, et par là la hauteur du montant vertical avant 12 et de l'outil de coupe O, par pivotement du montant de liaison 14 par rapport au montant vertical arrière 11.

Le bras 1 comporte par ailleurs un support du capteur de mesure de hauteur composé d'un montant horizontal 21 monté sur le montant vertical avant 12 pour s'étendre vers l'avant dans la direction de trajet du véhicule de manière à être au-devant de l'outil agricole O supporté par le montant vertical avant 12. L'extrémité avant du montant horizontal 21 porte une barre horizontale de support de capteur de mesure de hauteur 22 qui s'étend perpendiculairement à la direction de trajet.

Le capteur de mesure de hauteur est un appareil à rideau de lumière composé d'un émetteur E sous la forme d'une colonne de sources lumineuses S1, S2, ..., Sm, et d'un récepteur R sous la forme d'une colonne de photorécepteurs. L'émetteur E et le récepteur R sont montés sur le bras 1 de manière à se faire face et à s'étendre selon leur direction longitudinale perpendiculairement au sol pour permettre de mesurer la hauteur de végétaux présents entre eux. Chaque émetteur est ainsi apte à émettre un faisceau, par exemple dans l'infrarouge, en direction du photorécepteur qui lui fait face.

L'émetteur E et le récepteur R sont chacun portés par la barre horizontale de support de capteur de mesure de hauteur 22, par exemple à chacune de ses extrémités. Cette barre horizontale 22 peut supporter, par exemple à chacune de ses extrémités, un élément vertical 23 apte à permettre le montage de l'émetteur E ou du récepteur R. La barre horizontale 22 est de préférence dimensionnée pour permettre la mesure de hauteur d'un unique rang de culture entre l'émetteur et le récepteur du capteur de mesure de hauteur.

Le fait d'avoir recours à un émetteur E sous la forme d'une colonne de sources lumineuses S1, S2, ..., Sm, et d'un récepteur R sous la forme d'une colonne de photorécepteurs permet de multiplier les capteurs en amont de l'outil agricole ce qui autorise l'élaboration d'une consigne de montée ou de descente du bras non pas « tout ou rien » mais au contraire quantifiée.

Un exemple de capteur de mesure de hauteur pouvant être utilisé dans le cadre de l'invention est un rideau lumineux de mesure A-GAGE™ EZ-ARRAY™ proposé par la société Turck Banner. On peut notamment choisir un capteur dont la hauteur de rideau est de 600 mm avec une résolution de 5 mm, le balayage s'effectuant de bas en haut en 9,3 ms.

On relèvera que ce capteur présente l'avantage de ne pas être perturbé par l'exposition solaire et les vibrations de la machine. Optionnellement, un dispositif de jet d'air comprimé lui est associé pour débarrasser la poussière ou des gouttes qui pourraient se déposer sur le capteur.

Ce capteur présente l'avantage de proposer plusieurs modes de mesure, pour fournir différentes indications comme le premier faisceau obstrué, le dernier faisceau établi, le nombre total de faisceaux obstrués, etc. Le mode repérant le dernier faisceau obstrué peut être privilégié puisqu'il permet d'obtenir le profil de la plante en localisant la hauteur maximale de la plante à l'aide du rideau lumineux. Ainsi, dans un mode de réalisation de l'invention, le capteur de mesure de hauteur est configuré pour réaliser un balayage droit selon lequel tous les faisceaux entre une source lumineuse et un photorécepteur se faisant face sont balayés à tour de rôle depuis le faisceau le plus proche du sol, et pour fournir une indication relative au dernier faisceau bloqué.

Un modèle simplifié du bras avec le ou les outils O et le capteur de mesure de hauteur E, R en amont dans la direction de trajet est proposé en figure 2. Les acquisitions sont réalisées par exemple toutes les millisecondes. En revanche, la consigne est calculée par exemple toutes les 100 ms, à partir d'un certain nombre d'acquisitions précédant le calcul. Un variateur couplé à un moteur peut être utilisé pour commander en tension l'allongement du vérin 16, ici électrique. La tension envoyée au variateur est reliée à la position angulaire moteur par la relation :

$$\theta_{moteur} = \frac{1}{U_{\max\ variateur}} \left( 360 \frac{C_{vérin}}{p} \right) U_{variateur} \quad (1)$$

Avec $U_{\max\ variateur}$ la tension maximale qui peut être envoyée au variateur (10V par exemple), $C_{vérin}$ la course du vérin électrique (300 mm par exemple) et p le pas de la vis du moteur (10mm/rev par exemple). L'invention s'étend toutefois à d'autres types de vérins, notamment aux vérins hydrauliques.

Lors d'une acquisition, on récupère l'allongement du vérin 16 grâce à un capteur de position angulaire, par exemple un résolveur, puis il est nécessaire de retrouver la hauteur absolue $h_{absolue\ outils}$ de l'outil O par géométrie pour en déduire la hauteur absolue $h_{absolue\ maïs}$ du maïs. Lors de la boucle de calcul de la consigne, les hauteurs absolues du maïs peuvent être traitées selon différentes stratégies, dont des exemples seront présentés ci-après, pour obtenir la consigne de hauteur de coupe, c'est-à-dire la consigne de hauteur absolue des outils. Cette dernière est ensuite convertie en allongement de vérin, puis en tension qui est envoyée au variateur.

L'objectif est donc d'abord de connaître la relation entre l'allongement du vérin et la hauteur absolue des outils ainsi que celle entre la hauteur absolue des outils et la hauteur absolue du maïs, afin de pouvoir appliquer les différentes stratégies aux hauteurs absolue du maïs. Le capteur de position du moteur permet de connaître le nombre d'incréments $n_{incréments}$ du moteur pilotant le vérin 16 qui est à convertir en position moteur $\theta_{moteur}$ puis en allongement de vérin $x_{allongement}$ grâce aux formules :

$$\theta_{moteur} = \frac{2\pi}{2^m} n_{incréments} - \theta_{moteur\ initiale} \tag{2}$$

$$x_{allongement} = \frac{p}{2\pi} \theta_{moteur} \tag{3}$$

Avec m l'unité d'incréments (20 pour le moteur utilisé), p le pas de vis (10mm/rev pour le vérin utilisé) et $\theta_{moteur\ initiale}$ la position initiale du moteur.

Pour calculer $h_{absolue\ outils}$ en fonction de $x_{allongement}$, on utilise l'angle $\theta$, représenté en Figure 2, entre le montant vertical arrière 11 et le montant de liaison 14. Par géométrie, on obtient la relation suivante :

$$\left(l_0 + x_{allongement}\right)^2 = L_1^2 + L_3^2 + L_4^2 + H_2^2 + 2sin\theta(L_1L_3 - L_4H_2) - 2cos\theta(L_1H_{2+}L_3L_4) \tag{4}$$

D'où,

$$\left(l_0 + x_{allongement}\right)^2 = L_1^2 + L_3^2 + L_4^2 + H_2^2 + 2\sin(\theta - \alpha)\sqrt{(L_1L_3 - L_4H_2)^2 + (L_1H_2 + L_3L_4)} \tag{5}$$

Avec

$$\alpha = \text{atan}\left(\frac{\sin\alpha}{\cos\alpha}\right) = \text{atan}\left(\frac{2(L_1H_{2+}L_3L_4)}{2(L_1L_3 - L_4H_2)}\right)$$

Donc:

$$\theta = \text{asin}\left(\frac{\left(l_0 + x_{allongement}\right)^2 - L_1^2 - L_3^2 - L_4^2 - H_2^2}{2\sqrt{(L_1L_3 - L_4H_2)^2 + (L_1H_2 + L_3L_4)}}\right) + \text{atan}\left(\frac{L_1H_{2+}L_3L_4}{L_1L_3 - L_4H_2}\right) \tag{6}$$

De plus, on a :

$$cos\theta = \frac{H_1 + H_2 - H_3 - h_{absolue\ outils}}{L_2} \tag{7}$$

Donc on obtient :

$$h_{absolue\ outils} = H_1 + H_2 - H_3 - L_2 cos\theta \tag{8}$$

Enfin, on peut définir la relation suivante:

$$h_{absolue\ maïs} = h_{absolue\ outils} + H_{maïs-outils} + h_{relative\ maïs} \qquad (9)$$

Sachant que $h_{relative\ maïs}$ est la hauteur relative du maïs par rapport au milieu du capteur de mesure de hauteur (valeur comprise entre -300 mm et +300 mm pour un rideau de hauteur $L_{barrière}$ = 600mm). En effet, le capteur de mesure de hauteur renvoie une tension $U_{barrière}$ entre $U_{barrière\ à\ vide}$, la tension du détecteur à vide, et $U_{max\ barrière}$, la tension maximale du détecteur (10V pour le détecteur utilisé), proportionnelle à la hauteur du dernier faisceau obstrué par le maïs grâce à la formule (10) :

$$h_{relative\ maïs} = \frac{L_{barrière}}{U_{max\ barrière} - U_{barrière\ à\ vide}} (U_{barrière} - U_{barrière\ à\ vide}) - 0,5\ L_{barrière}$$

D'autre part, une fois que la consigne de hauteur a été calculée grâce aux différentes stratégies, c'est-à-dire la hauteur $h_{absolue\ outils}$ à laquelle les outils doivent se trouver au moment où la plante à couper se situe au niveau des outils, il est nécessaire de connaître la consigne qui correspond en termes d'allongement du vérin $x_{allongement}$ Pour cela, grâce à la relation (7) on calcule l'angle $\theta$ nécessaire pour obtenir la hauteur $h_{absolue\ outils}$ désirée. Puis l'équation (4) permet de déduire (11) :

$$x_{allongement}$$
$$= \sqrt{L_1{}^2 + L_3{}^2 + L_4{}^2 + H_2{}^2 + 2sin\theta(L_1L_3 - L_4H_2) - 2cos\theta(L_1H_2 + L_3L_4)} - l_0$$

Par ailleurs, on peut prendre soin de venir borner la consigne d'allongement entre 0 et la course du vérin (300 mm pour le vérin utilisé) afin de ne pas obtenir des consignes négatives ou supérieures à l'allongement maximal du vérin.

Enfin, on calcule la tension $U_{variateur}$, entre $U_{min\ variateur}$ et $U_{max\ variateur}$ (entre 0 et 10V pour le variateur utilisé), à envoyer au variateur grâce à la formule (12) :

$$U_{variateur} = \frac{U_{max\ variateur} - U_{min\ variateur}}{C_{vérin}} x_{allongement} + U_{min\ variateur}$$

On détaille ci-après l'élaboration par le calculateur de la consigne de commande de la hauteur du bras (détermination de $h_{absolue\ outils}$ et par là de $U_{variateur}$) à partir des mesures réalisées par le capteur de mesure de hauteur (mesure de $U_{barrière}$ pour remonter à $h_{absolue\ maïs}$).

L'objectif de la coupe aux couteaux est de dégager la vue sur le rang en coupant juste assez de feuilles et de panicules pour que celles-ci puissent encore repousser par la suite. La coupe doit donc être relativement homogène, sans créer trop d'irrégularités. La hauteur de coupe idéale de la panicule se situe aux trois quarts de la panicule. Ceci suppose de repérer la hauteur de la base et du sommet de la panicule pour en repérer les trois quarts, ce qui est difficilement reproductible avec des capteurs, particulièrement étant donné que la panicule peut être cachée au sein du cornet. Par ailleurs, imposer une hauteur de coupe à un certain nombre de centimètres en dessous du sommet du pied n'est pas adapté car la panicule peut aussi bien être proche de ce sommet que beaucoup plus basse. Il est donc nécessaire d'obtenir une mesure relative, adaptée à chaque pied de maïs et à différentes architectures de plantes (port dressé, feuilles retombantes,...).

Lors de l'arrachage, il est nécessaire d'enlever toutes les panicules qui ont repoussées. Comme les panicules repoussent plus vite que les feuilles, l'objectif est que la hauteur des feuilles reste relativement homogène afin que dépassent les panicules. Pour cela, il faut limiter les variations brusques de hauteur lors de la coupe afin de pouvoir ensuite suivre ces variations lors de l'arrachage. Pour l'arrachage, il est nécessaire de venir placer les rouleaux ou les pneus au plus près de la cime des feuilles afin d'arracher les panicules qui dépassent sans enlever trop de feuilles.

Plusieurs stratégies peuvent donc être envisagées selon leur pertinence pour la coupe ou l'arrachage. Chaque stratégie peut reposer sur le fait que le temps écoulé entre deux acquisitions des données du capteur de mesure de hauteur est converti en distance parcourue grâce à la vitesse calculée à chaque instant. Le rideau de lumière étant situé en amont du ou des outils, la consigne à envoyer à l'actionneur à un instant t n'est pas calculée grâce aux données capteurs à ce même instant t mais aux données capteurs antérieures. Ainsi, les données capteurs sont mémorisées au fur et à mesure puis la consigne est calculée à partir d'un petit échantillon d'acquisitions, la première acquisition étant située à une distance $d_{offset}$ de l'acquisition actuelle. La consigne est ensuite calculée à partir des acquisitions comprises sur une distance $d_{Ech}$ et qui correspondent aux acquisitions des plantes se trouvant actuellement au niveau des outils.

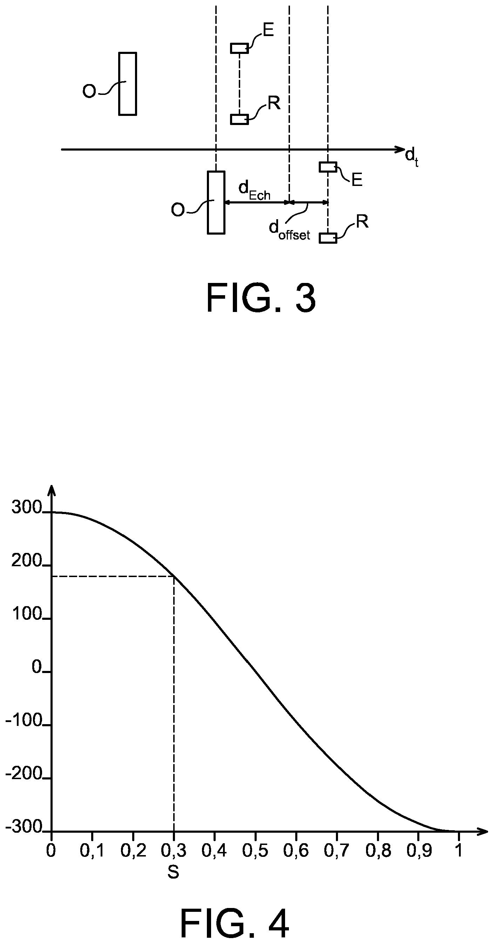

La figure 3 illustre ces deux distances. Sur cette figure, on a représenté en haut l'outil O et le capteur E, R à un instant t, et en bas l'outil O et le capteur E, R à un instant ultérieur avec un déplacement suivant la direction de trajet Dt du véhicule. La consigne envoyée à l'instant ultérieur est calculée à partir des acquisitions antérieures des données du capteur réalisées alors que le capteur parcourait la distance $d_{Ech}$. Ainsi, le système selon l'invention peut comprendre en outre une mémoire dans laquelle sont enregistrées les mesures réalisées par le capteur de mesure de hauteur, et le calculateur peut être configuré pour fournir la consigne de commande de la hauteur du bras sur la base de mesures précédemment enregistrées dans la mémoire et correspondant au déplacement préalable du capteur de mesure de hauteur sur une distance prédéterminée $d_{Ech}$ de la direction de trajet Dt en amont de la position actuelle de l'outil de coupe. Cette distance prédéterminée $d_{Ech}$ est au plus égale à la distance séparant l'outil O du capteur de mesure de hauteur E, R.

Dans le cadre de ce mode de réalisation, il importe de connaître précisément la vitesse de déplacement à chaque instant d'échantillonnage afin de travailler non pas en temps écoulé mais en distance parcourue. Pour ce faire, le système peut comprendre un capteur de mesure de la vitesse d'avancement dans la direction de trajet du véhicule, et le calculateur est alors configuré pour déterminer la distance parcourue le long de la direction de trajet entre deux mesures successivement réalisées par le capteur de mesure de hauteur. En d'autres termes, il est possible d'horodater les échantillons en mémoire avec la vitesse instantanée, pour ensuite permettre de déterminer, au moment du calcul de la consigne de hauteur, quels sont les échantillons correspondant au déplacement préalable du capteur de mesure de hauteur sur la distance prédéterminée $d_{Ech}$ (plus ou moins d'échantillons selon que le déplacement est rapide ou lent).

Le capteur de mesure de la vitesse d'avancement peut être constitué d'un capteur inductif de proximité associé à une roue en plastique fixée dans la jante d'une roue du véhicule et sur le pourtour de laquelle des pions métalliques sont agencés. A chaque passage devant un pion métallique, le signal en sortie du capteur est modifié. Ainsi, la vitesse d'avancement peut être déduite en calculant le temps écoulé entre deux fronts montants du signal de sortie, c'est-à-dire entre deux pions métalliques, connaissant la longueur de la corde entre ces deux points.

Pour chaque acquisition, on mémorise la hauteur absolue maximale du maïs $h_{absolue\ maïs}$. Puis on calcule la consigne de hauteur $h_{absolue\ outils}$ à laquelle les outils doivent venir couper la plante.

Ce calcul peut être réalisé de différentes manières selon la stratégie choisie.

Dans un mode de réalisation, le calculateur est configuré pour fournir la consigne de commande de la hauteur du bras à partir de la moyenne des mesures précédemment réalisées par le capteur de mesure de hauteur sur ladite distance prédéterminée $d_{Ech}$.

Ce mode de réalisation correspond à une stratégie dite « moyenne » selon laquelle pour les acquisitions de $d_{Ech}$, on calcule la hauteur moyenne du maïs. La consigne envoyée $h_{absolue\ outils}$ est ensuite égale à cette hauteur moyenne à laquelle on peut soustraire une hauteur $h_{offset}$ qui dépend de la variété coupée. Cette stratégie a pour avantage d'englober les vides entre deux pieds. Elle est destinée à être utilisée pour la coupe aux couteaux.

Dans un autre mode de réalisation, le calculateur est configuré pour fournir la consigne de commande de la hauteur du bras à partir du maxima des mesures précédemment réalisées par le capteur de mesure de hauteur sur ladite distance prédéterminée $d_{Ech}$.

Ce mode de réalisation correspond à une stratégie dite « maximum » selon laquelle pour les acquisitions de $d_{Ech}$, on repère la hauteur maximale parmi les hauteurs de maïs sur cet échantillon. La consigne envoyée $h_{absolue\ outils}$ est ensuite égale à cette hauteur maximale à laquelle on peut soustraire une hauteur $h_{offset}$ qui dépend de la variété coupée. Cette stratégie est plutôt destinée à l'arrachage aux rouleaux. Il a effectivement pu être vérifié que les panicules mesurant environ 10 mm de diamètre ne sont pas détectables par le rideau de lumière, seules les feuilles sont détectées en dessinant un profil relativement rectiligne suite à la coupe aux couteaux. L'objectif est donc ici de venir placer les rouleaux juste au sommet de ce profil, sachant que tout ce qui dépasse ne peut être que la panicule et sera donc arraché.

Dans encore un autre mode de réalisation, le calculateur est configuré pour calculer une densité foliaire indiquant, pour chaque intervalle de hauteur d'un ensemble d'intervalles successifs, le pourcentage de mesures parmi les mesures précédemment réalisées par le capteur de mesure de hauteur sur ladite distance prédéterminée $d_{Ech}$ qui indiquent une hauteur supérieure à la borne inférieure de l'intervalle de hauteur, et pour fournir la consigne de commande de la hauteur du bras à partir de la borne inférieure de l'intervalle de hauteur correspondant à un pourcentage seuil.

Ce mode de réalisation correspond à une stratégie dite « densité foliaire » selon laquelle pour les acquisitions de $d_{Ech}$, la hauteur minimale parmi les hauteurs de maïs sur cet échantillon est identifiée. Puis une boucle est créée qui définit une hauteur courante égale à la hauteur minimale incrémentée de 5 mm par exemple à chaque tour de boucle et le pourcentage d'acquisitions qui correspondent à une hauteur supérieure à cette nouvelle hauteur courante est calculé. Ainsi, pour la hauteur minimale de l'échantillon, 100% des acquisitions de l'échantillon ont une hauteur supérieure à la hauteur minimale. Puis au fur et à mesure que la hauteur courante augmente, de moins en moins d'acquisitions ont une hauteur supérieure à la hauteur courante. Ce pourcentage correspond à ce que l'on appelle une densité foliaire. On a représenté sur la figure 4 un exemple de densité foliaire pouvant être déterminée dans ce mode de réalisation.

On retrouve en ordonnée la hauteur des plantes $h_{relative\ maïs}$ et en abscisse le pourcentage de plantes de hauteur supérieure à cette hauteur $h_{relative\ maïs}$. On définit un seuil S à partir duquel on estime que la densité foliaire est suffisamment faible (30% dans l'exemple de la figure 4) pour correspondre à la hauteur optimale de coupe : en effet, plus on se rapproche du sommet de la plante, plus la densité foliaire est supposée diminuer. On relèvera que réciproquement la densité foliaire peut être estimée en partant de la hauteur maximale et en venant vérifier le pourcentage d'acquisitions présentant une hauteur inférieure.

La consigne envoyée $h_{absolue\ outils}$ est ensuite égale à la hauteur courante correspondant à ce seuil S (autour de +175mm sur l'exemple de la figure 4), à laquelle on peut soustraire une hauteur $h_{offset}$ qui dépend de la variété coupée. Cette stratégie est destinée à être utilisée pour la coupe aux couteaux. Elle se rapproche davantage de la mesure idéale des trois quarts de panicules : en effet, on imagine qu'à cette hauteur idéale il n'y a plus qu'un certain pourcentage de feuilles. De plus, elle prend en compte l'architecture de la plante : pour une variété à feuilles retombantes, il y aura davantage de feuilles autour de la panicule que pour une variété à port dressé.

L'invention n'est pas limitée au système tel que précédemment décrit mais s'étend également à un véhicule, notamment un enjambeur, équipé d'un ou plusieurs systèmes selon l'invention. Elle s'étend également à un procédé d'ajustement de la hauteur d'un outil agricole au moyen d'un système comprenant un bras apte à être commandé pour permettre d'élever et d'abaisser l'outil agricole, comprenant les étapes :

- d'acquisition de mesures d'un capteur de mesure de hauteur monté sur le bras et positionné de manière à être au-devant de l'outil agricole dans une direction de trajet d'un véhicule destiné à être équipé du bras, le capteur de mesure de hauteur étant un appareil à rideau de lumière composé d'un émetteur sous la forme d'une colonne de sources lumineuses et d'un récepteur sous la forme d'une colonne de photorécepteurs, l'émetteur et le récepteur étant montés sur le bras de manière à se faire face et à s'étendre selon leur direction longitudinale perpendiculairement au sol pour permettre de mesurer la hauteur de végétaux présents entre eux ; et
- de détermination d'une consigne de commande de la hauteur du bras à partir des mesures acquises.

L'invention apporte ainsi un gain en précision en venant déterminer une consigne de hauteur quantifiée, précise et adaptée à chaque pied de maïs grâce au développement d'algorithmes de calcul adaptés aux enjeux de la coupe et de l'arrachage.

De plus, l'invention apporte également un gain en productivité puisque le système peut être reproduit sur plusieurs bras afin de couper ou d'arracher plusieurs rangs simultanément, indépendamment les uns des autres.

Enfin, ce système permet de réduire la pénibilité du travail de l'agriculteur qui n'a plus à guetter en permanence les hauteurs de maïs et ajuster la hauteur des outils.

Ainsi, ce système améliore la rentabilité des opérations de castration mécanique et réduit le nombre de panicules restantes à arracher à la main.

## Revendications

1. Système d'ajustement de la hauteur d'un outil agricole (O), comprenant un bras (1) apte à être commandé pour permettre d'élever et d'abaisser l'outil agricole, un capteur de mesure de hauteur (E, R) monté sur le bras et positionné de manière à être au-devant de l'outil agricole dans une direction de trajet (Dt) d'un véhicule destiné à être équipé du bras, et un calculateur configuré pour fournir une consigne de commande de la hauteur du bras à partir des mesures réalisées par le capteur de mesure de hauteur, **caractérisé en ce que** le capteur de mesure de hauteur est un appareil à rideau de lumière composé d'un émetteur (E) sous la forme d'une colonne de sources lumineuses (S1, S2, Sm) et d'un récepteur (R) sous la forme d'une colonne de photorécepteurs, l'émetteur et le récepteur étant montés sur le bras de manière à se faire face et à s'étendre selon leur direction longitudinale perpendiculairement au sol pour permettre de mesurer la hauteur de végétaux présents entre eux.

2. Système selon la revendication 1, dans lequel le capteur de mesure de hauteur est configuré pour réaliser un balayage droit selon lequel tous les faisceaux entre une source lumineuse et un photorécepteur se faisant face sont balayés à tour de rôle depuis le faisceau le plus proche du sol et pour fournir une indication relative au dernier faisceau bloqué.

3. Système selon l'une des revendications 1 et 2, comprenant en outre une mémoire dans laquelle sont enregistrées les mesures réalisées par le capteur de mesure de hauteur, le calculateur étant configuré pour fournir la consigne de commande de la hauteur du bras sur la base de mesures précédemment enregistrées dans la mémoire et correspondant au déplacement préalable du capteur de mesure de hauteur sur une distance prédéterminée ($D_{Ech}$) de la direction de trajet (Dt) en amont de la position actuelle de l'outil de coupe.

4. Système selon la revendication 3, comprenant en outre un capteur de mesure de la vitesse d'avancement dans la direction de trajet du véhicule, et dans lequel le calculateur est en outre configuré pour déterminer la distance parcourue le long de la direction de trajet entre deux mesures successivement réalisées par le capteur de mesure de hauteur.

5. Système selon l'une des revendications 3 et 4, dans lequel le calculateur est configuré pour fournir la consigne de commande de la hauteur du bras à partir de la moyenne des mesures précédemment réalisées par le capteur de mesure de hauteur sur ladite distance prédéterminée ($D_{Ech}$).

6. Système selon l'une des revendications 3 et 4, dans lequel le calculateur est configuré pour fournir la consigne de commande de la hauteur du bras à partir du maxima des mesures précédemment réalisées par le capteur de mesure de hauteur sur ladite distance prédéterminée ($D_{Ech}$).

7. Système selon l'une des revendications 3 et 4, dans lequel le calculateur est configuré pour calculer une densité foliaire indiquant, pour chaque intervalle de hauteur d'un ensemble d'intervalles successifs, le pourcentage de mesures parmi les mesures précédemment réalisées par le capteur de mesure de hauteur sur ladite distance prédéterminée ($D_{Ech}$) qui indiquent une hauteur supérieure à la borne inférieure de l'intervalle de hauteur, et pour fournir la consigne de commande de la hauteur du bras à partir de la borne inférieure d'un intervalle de hauteur correspondant à un pourcentage seuil.

8. Système selon l'une des revendications 1 à 7, dans lequel le bras (1) comporte deux montants (11, 14) reliés de manière pivotante et un vérin (16) monté entre les montants pour permettre d'élever et d'abaisser l'outil agricole (O) par pivotement de l'un (14) des montants du bras par rapport à l'autre (11) des montants du bras.

9. Système selon l'une des revendications 1 à 8, dans lequel l'outil agricole est un outil de coupe ou d'arrachage de végétaux, en particulier de maïs.

10. Système selon l'une des revendications 1 à 9, dimensionné pour la mesure de hauteur et la coupe d'un unique rang de culture entre l'émetteur et le récepteur du capteur de mesure de hauteur.

11. Véhicule équipé d'un système selon l'une des revendications 1 à 10.

12. Procédé d'ajustement de la hauteur d'un outil agricole (O) au moyen d'un système comprenant un bras (1) apte à être commandé pour permettre d'élever et d'abaisser l'outil agricole, comprenant les étapes :

   - d'acquisition de mesures d'un capteur de mesure de hauteur (E, R) monté sur le bras et positionné de manière à être au-devant de l'outil agricole dans une direction de trajet (Dt) d'un véhicule destiné à être équipé du bras, le capteur de mesure de hauteur étant un appareil à rideau de lumière composé d'un émetteur (E) sous la forme d'une colonne de sources lumineuses (S1, S2, Sm) et d'un récepteur (R) sous la forme d'une colonne de photorécepteurs, l'émetteur et le récepteur étant montés sur le bras de manière à se faire face et à s'étendre selon leur direction longitudinale perpendiculairement au sol pour permettre de mesurer la hauteur de végétaux présents entre eux ; et
   - de détermination d'une consigne de commande de la hauteur du bras à partir des mesures acquises.

**Patentansprüche**

1. System zur Einstellung der Höhe eines landwirtschaftlichen Werkzeugs (O), umfassend einen Arm (1), der für eine Steuerung ausgelegt ist, um ein Anheben und Absenken des landwirtschaftlichen Werkzeugs zu ermöglichen, einen Höhenmesssensor (E, R), der an dem Arm montiert und derart positioniert ist, dass er in einer Fahrtrichtung (Dt) eines Fahrzeugs, das mit dem Arm ausgestattet sein soll, vor dem landwirtschaftlichen Werkzeug ist, und einen Rechner, der dazu ausgelegt ist, einen Steuerungssollwert der Höhe des Arms ausgehend von Messungen zu liefern, die durch den Höhenmesssensor realisiert werden, **dadurch gekennzeichnet, dass** der Höhenmesssensor ein Gerät mit einem Lichtvorhang ist, gebildet mit einem Emitter (E) in Form einer Säule von Lichtquellen (S1, S2, Sm) und einem Empfänger (R) in Form einer Säule von Fotoempfängern, wobei der Emitter und der Empfänger an dem Arm derart montiert sind, dass sie sich gegenüber liegen und sich entlang ihrer Längsrichtung orthogonal zum Boden erstrecken, um das Messen der Höhe von Pflanzen zu ermöglichen, die zwischen ihnen vorhanden sind.

**2.** System nach Anspruch 1, bei dem der Höhenmesssensor dazu ausgelegt ist, eine gerade Ablenkung zu realisieren, bei der alle Strahlen zwischen einer Lichtquelle und einem Fotoempfänger, die sich gegenüber liegen, der Reihe nach ausgehend von dem Strahl abgelenkt werden, der dem Boden am nächsten ist, und eine Angabe bezüglich des letzten blockierten Strahls zu liefern.

**3.** System nach einem der Ansprüche 1 und 2, ferner umfassend einen Speicher, in dem die durch den Höhenmesssensor realisierten Messungen gespeichert sind, wobei der Rechner dazu ausgelegt ist, den Steuerungssollwert der Höhe des Arms auf Basis von Messungen zu liefern, die zuvor in dem Speicher gespeichert wurden und die einer vorherigen Verlagerung des Höhenmesssensors über einen vorbestimmten Abstand ($D_{Ech}$) der Fahrtrichtung (Dt) stromaufwärts der aktuellen Position des Schneidwerkzeugs entsprechen.

**4.** System nach Anspruch 3, ferner umfassend einen Sensor zur Messung der Bewegungsgeschwindigkeit in der Fahrtrichtung des Fahrzeugs, und wobei der Rechner ferner dazu ausgelegt ist, den Abstand zu bestimmen, der entlang der Fahrtrichtung zurückgelegt wurde zwischen zwei Messungen, die nacheinander durch den Höhenmesssensor realisiert wurden.

**5.** System nach einem der Ansprüche 3 und 4, bei dem der Rechner dazu ausgelegt ist, den Steuerungssollwert der Höhe des Arms ausgehend vom Mittelwert der Messungen zu liefern, die zuvor durch den Höhenmesssensor auf dem vorbestimmten Abstand ($D_{Ech}$) realisiert wurden.

**6.** System nach einem der Ansprüche 3 und 4, bei dem der Rechner dazu ausgelegt ist, den Steuerungssollwert der Höhe des Arms ausgehend vom Maximum der Messungen zu liefern, die zuvor durch den Höhenmesssensor auf dem vorbestimmten Abstand ($D_{Ech}$) realisiert wurden.

**7.** System nach einem der Ansprüche 3 und 4, bei dem der Rechner dazu ausgelegt ist, eine Blattdichte zu berechnen, die für jedes Höhenintervall einer Gesamtheit von aufeinander folgenden Intervallen den Prozentsatz von Messungen aus den Messungen angibt, die zuvor durch den Höhenmesssensor auf dem vorbestimmten Abstand ($D_{Ech}$) realisiert wurden, die eine Höhe größer als die untere Grenze des Höhenintervalls angeben, und den Steuerungssollwert der Höhe des Arms ausgehend von der unteren Grenze eines Höhenintervalls entsprechend einem Schwellenprozentsatz zu liefern.

**8.** System nach einem der Ansprüche 1 bis 7, bei dem der Arm (1) zwei Pfosten (11, 14) umfasst, die schwenkbar verbunden sind, sowie einen Zylinder (16), der zwischen den Pfosten montiert ist, um ein Anheben und ein Absenken des landwirtschaftlichen Werkzeugs (O) durch Schwenken eines (14) der Pfosten des Arms relativ zum anderen (11) der Pfosten des Arms zu ermöglichen.

**9.** System nach einem der Ansprüche 1 bis 8, bei dem das landwirtschaftliche Werkzeug ein Werkzeug zum Schneiden oder Jäten von Pflanzen ist, insbesondere von Mais.

**10.** System nach einem der Ansprüche 1 bis 9, dimensioniert für die Höhenmessung und das Schneiden eines einzigen Pflanzenkulturrangs zwischen dem Emitter und dem Empfänger des Höhenmesssensors.

**11.** Fahrzeug, das mit einem System nach einen der Ansprüche 1 bis 10 ausgestattet ist.

**12.** Verfahren zur Einstellung der Höhe eines landwirtschaftlichen Werkzeugs (O) mittels eines Systems, das einen Arm (1) umfasst, der für eine Steuerung ausgelegt ist, um ein Anheben und ein Absenken des landwirtschaftlichen Werkzeugs zu ermöglichen, umfassend die Schritte:

- Erfassen von Messungen eines Höhenmesssensors (E, R), der an dem Arm montiert und derart positioniert ist, dass er in einer Fahrtrichtung (Dt) eines Fahrzeugs, das mit dem Arm ausgestattet sein soll, vor dem landwirtschaftlichen Werkzeug ist, wobei der Höhenmesssensor ein Gerät mit einem Lichtvorhang ist, gebildet mit einem Emitter (E) in Form einer Säule von Lichtquellen (S1, S2, Sm) und einem Empfänger (R) in Form einer Säule von Fotoempfängern, wobei der Emitter und der Empfänger an dem Arm derart montiert sind, dass sie sich gegenüber liegen und sich in ihrer Längsrichtung orthogonal zum Boden erstrecken, um das Messen der Höhe von Pflanzen zu ermöglichen, die zwischen ihnen vorhanden sind; und
- Bestimmen eines Steuerungssollwerts der Höhe des Arms ausgehend von den erfassten Messungen.

**Claims**

1. System for adjusting the height of an agricultural implement (O), comprising an arm (1) that can be controlled so as to raise and lower the agricultural implement, a height measuring sensor (E, R) mounted on the arm and positioned in front of the agricultural implement in a direction of travel (Dt) of a vehicle intended to be equipped with the arm, and a calculator configured to provide a control set point for the height of the arm on the basis of the measurements obtained by the height measuring sensor, **characterised in that** the height measuring sensor is a light screen device formed by an emitter (E) in the form of a column of light sources (S1, S2, Sm) and a receiver (R) in the form of a column of photoreceptors, the emitter and the receiver being mounted on the arm facing one another and extending along their longitudinal axis, perpendicularly to the ground in order to make it possible to measure the height of plants located therebetween.

2. System according to claim 1, wherein the height measuring sensor is configured to carry out a straight sweep according to which all of the beams between a light source and a photoreceptor facing each other are scanned in turn from the beam that is closest to the ground and to provide a indication relative to the last blocked beam.

3. System according to one of claims 1 and 2, further comprising a memory in which the measurements made by the height measuring sensor are recorded, the calculator being configured to provide the control set point for the height of the arm based on measurements previously recorded in the memory and corresponding to the prior displacement of the height measuring sensor over a predetermined distance ($D_{samp}$) of the direction of travel (Dt) upstream of the current position of the cutting implement.

4. System according to claim 3, further comprising a measurement sensor of the forward speed in the direction of travel of the vehicle, and wherein the calculator is furthermore configured to determine the distance travelled along the direction of travel between two measurements taken successively by the height measuring sensor.

5. System according to one of claims 3 and 4, wherein the calculator is configured to provide the control set point for the height of the arm using the average of the measurements previously made by the height measuring sensor over said predetermined distance ($D_{Ech}$).

6. System according to one of claims 3 and 4, wherein the calculator is configured to provide the control set point for the height of the arm using the maxima of the measurements made by the height measuring sensor over said predetermined distance ($D_{Ech}$).

7. System according to one of claims 3 and 4, wherein the calculator is configured to calculate a foliage density that indicates, for each height interval of a set of successive intervals, the percentage of measurements among the measurements previously made by the height measuring sensor over said predetermined distance ($D_{samp}$) which indicate a height greater than the lower limit of the height interval, and to provide the control set point for the height of the arm on the basis of the lower limit of a height interval corresponding to a threshold percentage.

8. System according to one of claims 1 to 7, wherein the arm (1) comprises two posts (11, 14) connected so as to pivot and a cylinder (16) mounted between the posts so as to raise and lower the agricultural implement (O) by pivoting of one (14) of the posts of the arm with respect to the other (11) of the posts of the arm.

9. System according to one of claims 1 to 8, wherein the agricultural implement is an implement for cutting or tearing plants, corn in particular.

10. System according to one of claims 1 to 9, sized for measuring the height and the cutting of a single row of crop between the emitter and the receiver of the height measuring sensor.

11. Vehicle equipped with a system according to one of claims 1 to 10.

12. Method for adjusting the height of an agricultural implement (O) by means of a system comprising an arm (1) that can be controlled so as to raise and lower the agricultural implement, comprising the steps:

   - acquiring measurements from a height measuring sensor (E, R) mounted on the arm and positioned in front of the agricultural implement in a direction of travel (Dt) of a vehicle intended to be equipped with the arm, the height measuring sensor being a light screen device formed by an emitter (E) in the form of a column of light sources (S1, S2, Sm) and a receiver (R) in the form of a column of photoreceptors, the emitter and the receiver being mounted on the arm facing one another and extending along their longitudinal axis, perpendicularly to the ground in order to make it possible to measure the height of plants located therebetween; and
- determining a control set point for the height of the arm on the basis of the acquired measurements.

FIG. 1

FIG. 2

# FIG. 3

# FIG. 4

**EP 3 226 671 B1**

## RÉFÉRENCES CITÉES DANS LA DESCRIPTION

**Documents brevets cités dans la description**

- US 4197691 A
- US 4507910 A
- US 8381502 B
- AU 5387473 A